# EUROPÄISCHE PATENTSCHRIFT

(11) **EP 1 477 709 B1**
(45) Veröffentlichungstag und Bekanntmachung des Hinweises auf die Patenterteilung: **04.10.2006**
(21) Anmeldenummer: 03101362.6
(22) Anmeldetag: 15.05.2003
(51) Int. Cl.: F16H 57/02

(54) **Gehäuse**
Housing
Boîtier

(43) Veröffentlichungstag der Anmeldung: 17.11.2004
(73) Patentinhaber: Ford Global Technologies, LLC, A subsidary of Ford Motor Company, Dearborn, MI 48126 (US)
(72) Erfinder: Premiski, Vladimir, 33950 lege cap ferret (FR); Sastrarahardja, Paulus, 53945 Blankenheim (DE)
(74) Vertreter: Drömer, Hans-Carsten

(56) Entgegenhaltungen:
- DE-C- 19 533 140
- PATENT ABSTRACTS OF JAPAN vol. 008, no. 203 (M-326), 18. September 1984 (1984-09-18) -& JP 59 093565 A (AISHIN SEIKI KK), 30. Mai 1984 (1984-05-30)
- PATENT ABSTRACTS OF JAPAN vol. 1998, no. 14, 31. Dezember 1998 (1998-12-31) -& JP 10 252868 A (MITSUBISHI MOTORS CORP), 22. September 1998 (1998-09-22)
- PATENT ABSTRACTS OF JAPAN vol. 1999, no. 02, 26. Februar 1999 (1999-02-26) -& JP 10 311408 A (JATCO CORP), 24. November 1998 (1998-11-24)
- PATENT ABSTRACTS OF JAPAN vol. 012, no. 343 (M-741), 14. September 1988 (1988-09-14) -& JP 63 101570 A (FUJI HEAVY IND LTD), 6. Mai 1988 (1988-05-06)

## Beschreibung

Die Erfindung betrifft ein Gehäuse für ein ölbefülltes Getriebe dessen Innenraum zwecks Druckausgleich über einen Entlüftungskanal mit der Atmosphäre verbunden ist, insbesondere für ein Fahrzeuggetriebe, bestehend aus wenigstens zwei Gehäuseteilen, wobei die Gehäuseteile Fügeflächen aufweisen, die im aneinandergefügten Zustand eine Teilungsebene des Gehäuses bilden.

Getriebe müssen mit einem Entlüftungskanal versehen sein, der einen Druckausgleich zwischen dem Innenraum und der Atmosphäre schafft. In Betriebssituationen, die im Getriebeinneren einen Druck bewirken, der geringer als der atmosphärische Druck ist, würde andernfalls ein Sog entstehen, durch den Medien von außen in das Getriebeinnere dringen. Besonders dann, wenn es sich um eine schmutzige Umgebung handelt, gelangen auf diese Weise Medien in das Getriebe, die dessen Funktion beeinträchtigen können.

Insbesondere für Fahrzeuggetriebe ist ein Entlüftungskanal wichtig. Fahrzeuggetriebe unterliegen beispielsweise im Betrieb wechselnden äußeren Temperatureinflüssen. Diese sind ein Grund für eine ständige Veränderung des Innendrucks im Getriebe. Darüber hinaus sind Fahrzeuggetriebe der Umgebungsfeuchtigkeit und einer starken Verschmutzung ausgesetzt. Eingedrungenes Wasser kann nicht ausgeschieden werden und zu schweren Schäden führen.

Entlüftungssysteme für Getriebe sind bekannt. Sie müssen so konstruiert sein, dass das Austreten von umherspritzendem Öl aus einem Entlüftungskanal verhindert wird. Dabei muß der Entlüftungskanal sowohl die Ent- als auch die Belüftung sicherstellen. Der Entlüftungskanal kann teilweise oder ganz in Form von Bohrungen, auch Drosselbohrungen, ausgeführt sein.

Bei bewegten Maschinen, wie Fahrzeugen, besteht das besondere Problem einer sich ändernden Betriebslage, beispielsweise einer Neigung während einer Berg- und Talfahrt oder einer Fahrt parallel am Hang. Auch in diesen Situationen darf kein Öl austreten. Das gleiche gilt für Fahrsituationen mit starker Beschleunigung oder Verzögerung des Fahrzeugs. Dies, weil die Masse des Getriebeöls trägheitsbedingt in ihrem Bewegungszustand verharrt und kurzzeitig entgegen der Beschleunigungsbeziehungsweise Verzögerungswirkung in Richtung eines Entlüftungskanals strömen kann. Dabei wird das Entlüftungssystem mit Öl beaufschlagt. In einer vereinfachten Betrachtung liegt Öl in all diesen Situationen mit hydrostatischem Druck an dem Entlüftungskanal an und strömt ein.

Bei bekannten Entlüftungssystemen handelt es sich um Einbauten im Inneren des Getriebegehäuses, die entweder ein großes Speichervolumen und somit Bauraum benötigen oder einen labyrinthartigen Aufbau aufweisen, mit dem die Strömung von Öl gedrosselt wird. Ein Entlüftungssystem mit großem Speichervolumen ist aus der DE 195 33 140 C1 bekannt. Darin ferner ein Hinweis auf ein Entlüftungssystem enthalten, das mit einer Kammer und einer Bohrung zur Atmosphäre sowie einem Labyrinth zum Getriebeinnenraum versehen ist.

In der JP 59093565 ist ein gattungsgemäßes Getriebegehäuse offenbart, bei dem ein Entlüftungskanal zumindest abschnittsweise in der Teilungsebene des Gehäuses vorgesehen und in der Fügefläche eines Gehäuseteils integriert ist. Der Entlüftungskanal mündet an seinem der Atmosphäre zugewandten Ende in einer zur Atmosphäre offen Bohrung des Gehäuseteils. Da der Entlüftungskanal separat angeformt ist, benötigt er auch einen gewissen Bauaufwand, zumindest müssen die Löcher für die Entlüftung im Gehäuse freigehalten werden.

Der Erfindung liegt die Aufgabe zugrunde, ein Gehäuse für ein Getriebe vorzuschlagen, dessen Entlüftungskanal einfach und platzsparend aufgebaut sowie kostengünstig herstell- und montierbar ist.

Erfindungsgemäß wird die Aufgabe dadurch gelöst, dass der Entlüftungskanal zumindest abschnittsweise in der Teilungsebene des Gehäuses vorgesehen und in der Fügefläche eines Gehäuseteils integriert ist.

Die Teilungsebene des Gehäuses muss im Sinne der Erfindung nicht planeben sein. Es kann sich um eine Gehäuseteilung mit dreidimensionalem Verlauf handeln.

Während der Montage der Gehäuseteile entsteht der Entlüftungskanal selbsttätig durch das Aneinanderbringen und Verbinden der Gehäuseteile. Besondere Montageschritte für das Entlüftungssystem entfallen. Durch diese Maßnahme reduziert sich der Aufwand für die Entlüftung des Getriebes auf einfache Änderungen an Fügeflächen der ohnehin vorhandenen Gehäuseteile eines Getriebes.

Bei einem Gehäuse mit mehr als einer Teilungsebene kann der Entlüftungskanal wahlweise an einer der Teilungsebenen integriert sein oder mehrere Teilungsebenen sind mit Entlüftungskanälen versehen.

Zur Atmosphäre weist der Entlüftungskanal eine Verbindungsöffnung auf, die in normaler waagerechter Betriebsposition des Getriebes dem Ölsumpf abgewandt im oberen Bereich des Gehäuses angeordnet ist. Eine Verbindungsöffnung des Entlüftungskanals zum Innenraum des Getriebes liegt an dessen entgegengesetztem Ende etwa auf dem Niveau, das der Ölspiegel im Ruhezustand des Getriebes einnimmt. Im Ruhezustand kann die Verbindungsöffnung zum Innenraum ober- oder unterhalb des Ölspiegels liegen. Im normalen Betrieb spritzt so viel Öl in dem Gehäuse umher, dass die Verbindungsöffnung frei liegt und Luft zwecks Druckausgleich strömen kann.

Der Einfachheit halber weist der Entlüftungskanal eine Nut in der Fügefläche des Gehäuseteils auf, wobei die Nut im zusammengefügten Zustand des Getriebes abgedeckt ist und ein geschlossener Strömungsquerschnitt für den Entlüftungskanal entsteht.

Zur Abdeckung der Nut kann ein Gehäuseteil oder eine zwischengeschaltete Abdeckplatte dienen, wobei letztere im weiteren Sinn der Erfindung als Gehäuseteil aufzufassen ist.

Ein Entlüftungskanal lässt sich alternativ dadurch bilden, dass in beiden Gehäuseteilen Nuten vorgesehen sind, die sich ergänzen und einen gemeinsamen Strömungsquerschnitt ergeben. Ferner können Teilabschnitte des Entlüftungskanals als Nut in einem Gehäuseteil und andere Teilabschnitte als Nut in dem gegenüberliegenden Gehäuseteil angeordnet sein, wobei sich die Nuten teilweise überschneiden müssen, damit der Entlüftungskanal lückenlos ist. Abschnittsweise kann der Entlüftungskanal auch als Durchbruch in einem Gehäuseteil, z. B. als Bohrung, im besonderen als Drosselbohrung, ausgeführt sein.

Hilfreich besonders für ein Gehäuse einer bewegten Maschine, die im Betrieb Schieflagen einnimmt, ist es, wenn der Entlüftungskanal wenigstens ein Reservoir zwecks vorübergehender Speicherung von Getriebeöl aufweist. Auf diese Weise gedrosselt erfolgt ein gedrosselter Zulauf. Das Reservoir füllt sich langsam mit Öl. Das Volumen des Reservoirs ist angepasst an die erwarteten Betriebszustände: Neigungsfahrt beziehungsweise Beschleunigungsfahrt/Verzögerungsfahrt, während derer Öl in den Entlüftungskanal strömen kann. Das Volumen des Reservoirs ist stets größer ausgelegt als die bei kritischem Betrieb maximal zu erwartende Ölmenge.

In dem Entlüftungskanal sind günstigerweise drei Reservoirs vorgesehen, um die erforderliche Menge Öl vorübergehend zu speichern.

Die Reservoirs sind vorteilhaft durch genutete Kanalstücke in der Fügefläche des Gehäuseteils in einer Reihe liegend miteinander verbunden. Der Entlüftungskanal setzt sich demnach aus in Reihe hintereinander geschalteten voluminösen Reservoirs und Kanalstücken mit geringem Strömungsquerschnitt zusammen. Die Verbindung der Reservoirs kann auch durch andere Verbindungen oder Bohrungen, die nicht in der Teilungsebene liegen, erfolgen. D.h., in der vorliegenden Beschreibung sind die Kanalstücke entsprechend auch durch diese Verbindungen oder Bohrungen ersetzbar.

Es handelt sich bei dem vorgeschlagenen Entlüftungskanal mit zwischengeschalteten Reservoirs um ein kombiniertes System mit Speicherräumen einerseits und labyrinthartigem Aufbau andererseits. In den Volumina der Reservoirs wird das zuströmende Öl gesammelt, wobei jedoch jedem Reservoir ein enges Kanalstück vorgeschaltet ist, dass den Zustrom von Öl drosselt.

Die Funktion des Entlüftungskanals lässt sich verbessern, wenn die Volumina der hintereinandergeschalteten Reservoirs vom Innenraum des Getriebes zur Atmosphäre hin zunehmen.

Ein weiterer Nutzen ergibt sich, wenn ein mit Rippen versteiftes Gehäuseteil als Träger des Entlüftungskanals vorgesehen ist, wobei zwischen den Rippen des Gehäuseteils taschenförmige Kammern vorhanden sind, von denen wenigstens eine als Reservoir dient. Üblicherweise sind Gehäuseteile eines Getriebes ausgesteift. Sie weisen aus Stabilitätsgründen große Wandstärken auf. Zwecks Leichtbau sind dicke Wände wiederum ausgehöhlt, so dass sich die Kammern bilden, die vorteilhaft für den vorgeschlagenen Entlüftungskanal genutzt werden können. Häufig handelt es sich bei den Gehäuseteilen des Getriebes um Gusswerkstücke mit Gussrippen, welche zwischenliegende Gusskammem bilden. Der Einsatzbereich des Gusswerkstücks erweitert sich durch die Zusatzfunktion, den die Gusskammern als Reservoirs in dem Entlüftungskanal des Getriebegehäuses ausüben.

Weiterhin hilfreich ist es, wenn zwischen den beiden Enden des Entlüftungskanals ein zusätzlicher Verbindungskanal zum Innenraum des Getriebes als Ausgleichs- und Rückströmkanal vorgesehen ist. Immer dann, wenn die tiefstliegende Verbindungsöffnung, die den Innenraum des Getriebes mit dem Entlüftungskanal verbindet, bereits mit Öl beaufschlagt ist, kann über den höher liegenden Ausgleichs- und Rückströmkanal ein Druckausgleich erfolgen.

Ein Druckausgleich ist möglich solange der Ausgleichs- und Rückströmkanal noch nicht mit Öl beaufschlagt ist. Erhöht sich die Neigung oder treten hohe Verzögerungswerte auf, so kann Öl in den Ausgleichs- und Rückströmkanal dringen. Dies kann beispielsweise bei einer Vollbremsung auftreten, wenn Verzögerungswerte von ca. zweifacher Erdbeschleunigung in horizontaler Richtung und einfacher Erdbeschleunigung in vertikaler Richtung zustande kommen.

Die Volumina der Reservoirs sind größer als das erwartete Ölvolumen, das bei jedwedem Betriebszustand durch die beiden Verbindungsöffnungen, nämlich die tiefliegende Verbindungsöffnung sowie den Ausgleichs- und Rückströmkanal, zuströmen kann.

Zweckmäßig ist der Ausgleichs- und Rückströmkanal mit dem mittleren Reservoir verbunden und in Betriebslage des Getriebes an der tiefsten Stelle des mittleren Reservoirs angeschlossen.

Wenn Öl das mittlere Reservoir des Entlüftungskanals gefüllt hat, kann es von dort auf kurzem Weg durch den Ausgleichs- und Rückströmkanal in den Innenraum des Gehäuses zurück. Der Ausgleichskanal dient in diesem Moment als zusätzlicher Rückströmkanal oder Bypass. Das Öl muss nicht durch das vorgeschaltete Reservoir zurückströmen. Sobald der Ölspiegel in dem Entlüftungskanal unter das mittlere Reservoirs abgesunken ist, ist der Ausgleichs- und Rückströmkanal frei. Er kann dann wieder einen Druckausgleich schaffen. Das untere Reservoir entleert sich wegen des Druckausgleichs rasch. Dies, weil eine der zuströmenden Menge Öl entsprechende Menge Luft aus dem Innenraum des Getriebes durch den Ausgleichs- und Rückströmkanal entweicht.

Der Entlüftungskanal mündet erfindungsgemäß an seinem der Atmosphäre zugewandten Ende in einer zur Atmosphäre offen Bohrung des Gehäuseteils. Einfacherweise dient ein genutetes Kanalstück zur Verbindung der Bohrung mit dem letzten der in Reihe geschalteten Reservoirs.

Besonders einfach und kostengünstig wird erfindungsgemäß als Bohrung mit Öffnung zur Atmosphäre eine an dem Gehäuseteil ohnehin vorhandene Bohrung verwendet. Diese Bohrung erhält die Zusatzfunktion, einen Teil des Entlüftungskanals zu bilden. Hierbei wird eine Bohrung verwendet, die zur Aufnahme einer Befestigungsschraube für den Gehäusedeckel dient. Eine an dem Rand der Bohrung vorgesehene Auflagefläche für den Kopf der Befestigungsschraube weist wenigstens eine Entlüftungskerbe auf. Ohne Entlüftungskerbe würde der Schraubenkopf die Bohrung nahezu dicht verschließen.

Wenn es sich bei dem Gehäuse um eines für ein Fahrzeuggetriebe mit einem ölbefüllten Übersetzungsgetriebe handelt, das eine zur Atmosphäre offenen Bereich der Gehäuseglocke aufweist, in der eine Kupplungseinheit angeordnet ist, bringt es einen weiteren Vorteil, wenn das der Atmosphäre zugewandte Ende des Entlüftungskanals schmutzgeschützt zum Innenraum des offenen Bereichs der Gehäuseglocke entlüftet ist. Auf diese Weise ist der Entlüftungskanal weitgehend freigehalten von dem äußeren Schmutz, dem ein Fahrzeuggetriebe ausgesetzt ist.

Die Lage des Entlüftungskanals ist am Getriebe nicht beschränkt auf die Gehäuseglocke, vielmehr ist jede Lage möglich, wo zumindest zwei Gehäuseteile miteinander verbunden sind, d. h. z. B. auch auf der Abtriebsseite des Getriebes oder in der Gehäusemitte. Dies gilt auch, wenn Gehäuseteile ins Getriebe eingesetzt werden und selber keine direkte Verbindung mit der Umgebung haben. In solch einem Fall wird die Verbindungsöffnung zur Umgebung durch das äußere Gehäuseteil geführt, während der Entlüftungskanal zumindest abschnittsweise in Bereich der Trennebene zwischen den Gehäusetei len angeordnet ist.

Nachfolgend ist die Erfindung in einer Zeichnung beispielhaft dargestellt und anhand der einzelnen Figuren detailliert beschrieben. Es zeigen:
Fig. 1 eine Schnittdarstellung eines Fahrzeuggetriebes mit Automatikschaltung und einem zur Atmosphäre offenen Gehäusebereich mit einem Drehmomentwandler,
Fig. 2 eine Ansicht gemäß II - II aus Fig. 1,
Fig. 3 einen Ausschnitt gemäß III - III aus Fig. 2,
Fig. 4 eine vergrößerte Darstellung des Ausschnitts IV gemäß Fig. 3,
Fig. 5 eine Darstellung einer Gehäuseglocke mit Entlüftungskanal.

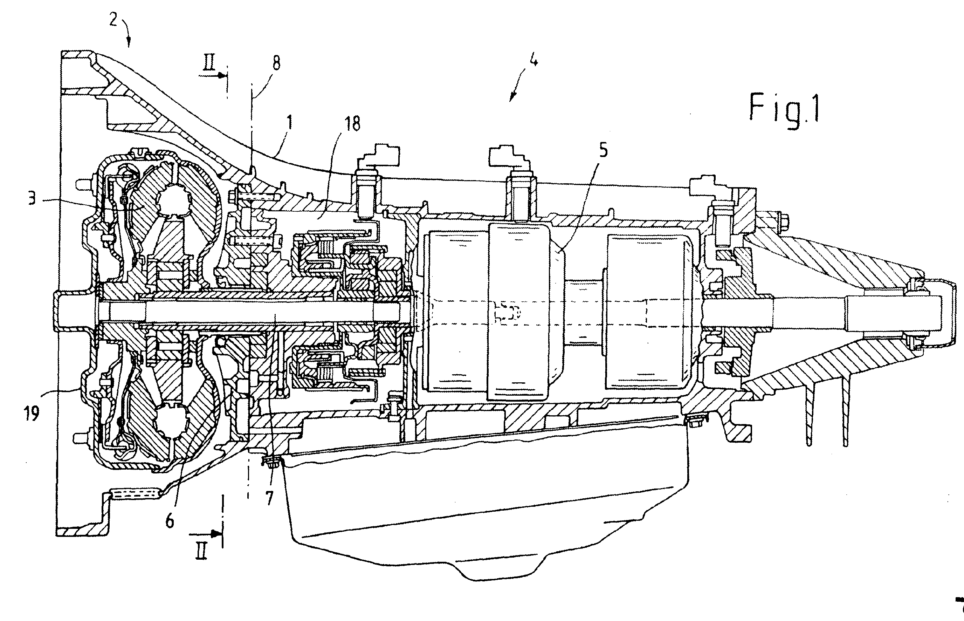

Nach Fig. 1 handelt es sich bei dem dargestellten Ausführungsbeispiel um ein Gehäuse eines Fahrzeuggetriebes mit Automatikschaltung. Das Gehäuse ist als Gehäuseglocke 1 ausgebildet. Die Gehäuseglocke 1 ist in zwei Bereiche unterteilt. Ein vorderer Bereich 2 auf der offenen Seite der Gehäuseglocke 1 ist mit einem Drehmomentwandler 3 bestückt. In einem hinteren Bereich 4 der Gehäuseglocke 1 ist ein Übersetzungsgetriebe 5 mit der Schaltautomatik angeordnet.

Der vordere und der hintere Bereich 2 beziehungsweise 4 der Gehäuseglocke 1 sind über ein inneres Gehäuseteil getrennt, hier ein Gehäusedeckel 6. Das Übersetzungsgetriebe 5 enthält Getriebeöl. Der Drehmomentwandler 3 sowie die Bauteile des Übersetzungsgetriebes 5 sind auf einer gemeinsamen Welle 7 angeordnet. Die Welle 7 durchdringt den Gehäusedeckel 6 und ist über eine in dem Gehäusedeckel 6 eingesetzte Wellendichtung abgedichtet, um einen Ölaustritt aus dem Übersetzungsgetriebe 5 zu verhindern.

Die Fügestelle zur Anbringung des Gehäusedeckels 6 an der Gehäuseglocke 1 bildet eine Teilungsebene 8 des Gehäuses. Zur Montage werden die Bauteile des Übersetzungsgetriebes 5 vormontiert und von dem vorderen Bereich 2 der Gehäuseglocke 1 in den hinteren Bereich 4 eingefügt und sodann der Gehäusedeckel 6 mit der Gehäuseglocke 1 verschraubt. Zwecks Abdichtung dieser beiden Gehäuseteile ist in der Teilungsebene 8 eine Dichtung D vorgesehen.

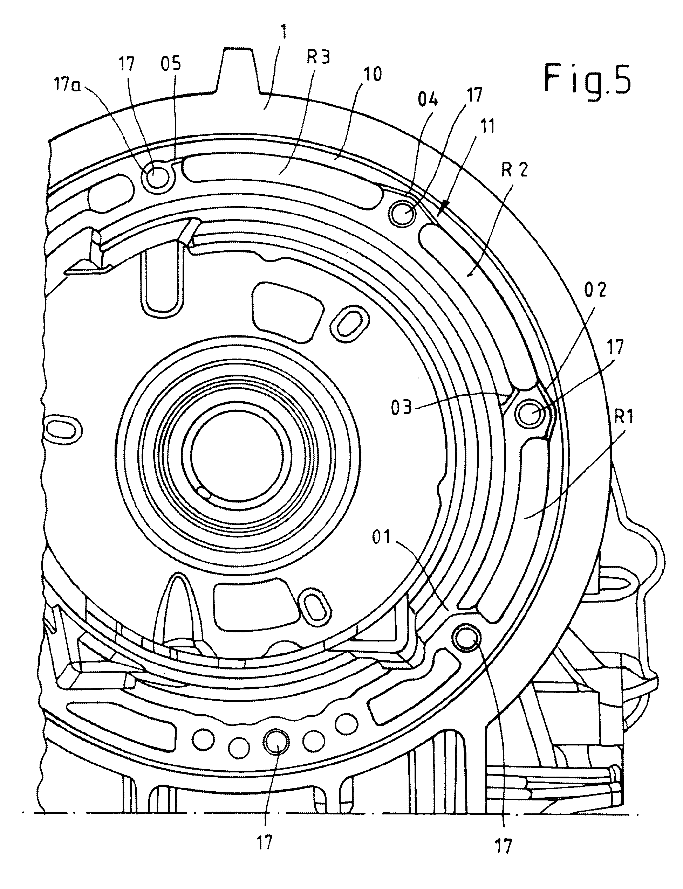

Um einen Druckausgleich zwischen dem Inneren des Übersetzungsgetriebes 5 und der Atmosphäre zu schaffen ist ein Entlüftungskanal 9 vorgesehen. Der Entlüftungskanal 9 ist in der Teilungsebene 8 des Gehäuses angeordnet. Sein Verlauf ist untenstehend anhand der Fig. 5 beschrieben. Zwecks einfacher Herstellung und Montage des Entlüftungskanals 9 ist in einer Fügefläche 10 des Gehäusedeckels 6 eine Nut 11 vorgesehen. Im fertig montierten Zustand des Getriebes liegt die offene Seite der Nut 11 an einer Fügefläche 12 des Gehäusedeckels 6 an. Auf diese Weise wird aus der Nut 11 ein geschlossener Strömungsquerschnitt, der den Entlüftungskanal 9 bildet.

Grundsätzlich kann jede beliebige der Fügeflächen 10 beziehungsweise 12 der Teilungsebene 8 des Gehäuses mit einer Nut versehen sein und den Entlüftungskanal 9 bilden. Entweder ist die Fügefläche 10 der Gehäuseglocke 1 genutet oder die Fügefläche 12 des Gehäusedeckels 6. Es ist auch möglich, beide Fügeflächen 10 und 12 mit Nuten 11 zu versehen, die aneinandergefügt einen gemeinsamen Entlüftungskanal 9 bilden.

Anstelle eines Gehäuseteils 1 beziehungsweise 6 zur Abdeckung der genuteten Fügefläche 10 beziehungsweise 12 kann eine separate Abdeckplatte vorgesehen sein, welche die Nut 11 auf der freien Seite schließt.

Im vorliegenden Ausführungsbeispiel ist die Nut 11 des Entlüftungskanals 9 in der Fügefläche 10 der Gehäuseglocke 1 angeordnet.

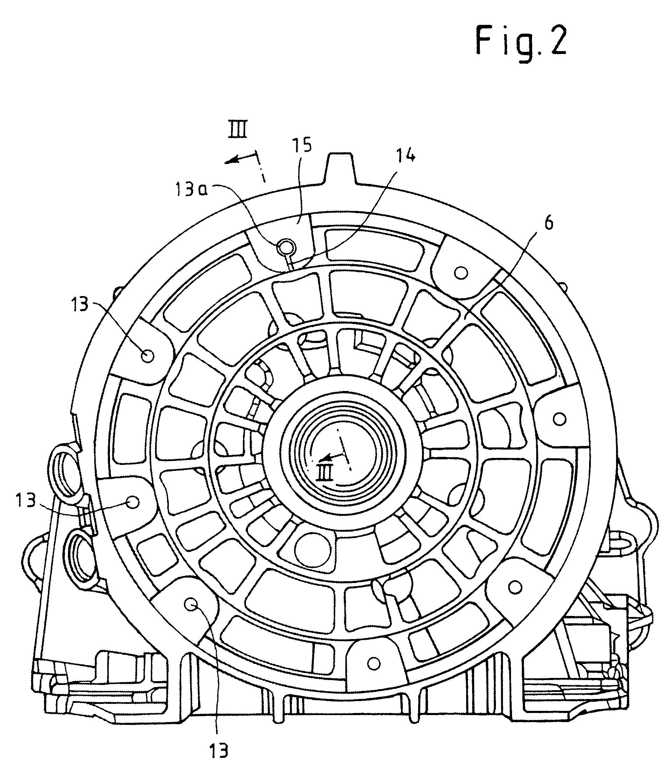

Fig. 2 zeigt eine Ansicht auf den montierten Gehäusedeckel 6 gemäß der in Fig. 1 eingetragenen Schnittlinie II - II. Der Gehäusedeckel 6 weist eine Anzahl von acht Durchsteckbohrungen 13 für Befestigungsschrauben auf. Darunter eine in Betriebslage des Getriebes oben angeordnete Durchsteckbohrung 13a. Letztere bildet den Ausgang des Entlüftungskanals 9 zur Atmosphäre. Die Durchsteckbohrungen 13 und 13a sind in Umfangsrichtung verteilt an dem Rand des Gehäusedeckels 6 angeordnet.

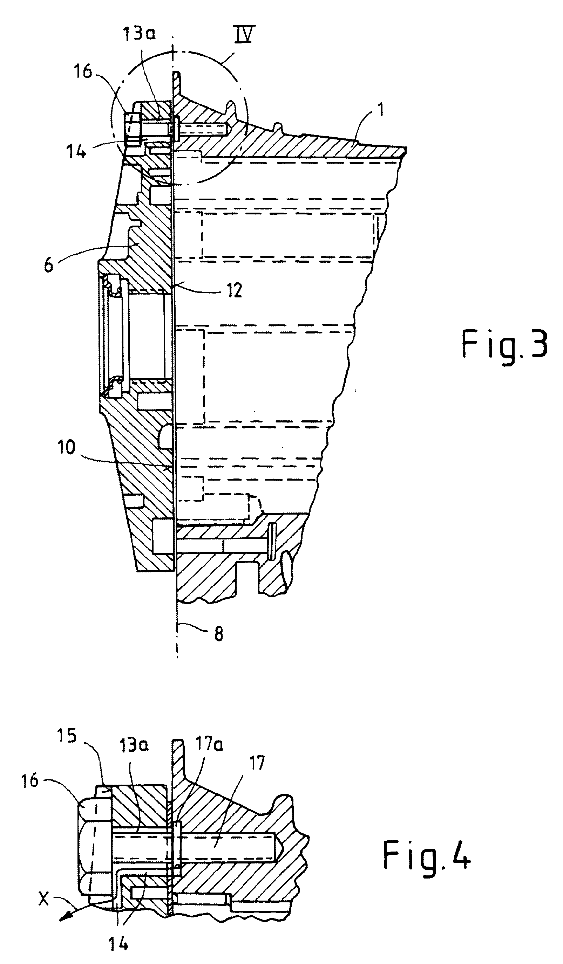

Wie am besten in den Figuren 3 und 4 zu erkennen, weist die Durchsteckbohrung 13a zum Zweck der Entlüftung eine in Längsrichtung der Bohrungswand verlaufende Entlüftungskerbe 14 auf. Die Entlüftungskerbe 14 setzt sich an der planen Auflagefläche 15 für die Befestigungsschraube fort. Auf diese Weise wird unter dem in Fig. 4 gestrichelt dargestellten Schraubenkopf 16 hindurch eine Entlüftung ermöglicht. In der ausschnittsweisen Vergrößerung der Fig. 4 ist der Verlauf der Entlüftungskerbe 14 erkennbar. Sie erstreckt sich in der Bohrung sowie an der Auflagefläche 15. Der Pfeil X markiert den Entlüftungsweg. Eine zugeordnete Gewindebohrung 17 in der Gehäuseglocke 1 weist eine Senkung 17a auf. Die übrigen Gewindebohrungen 17 zur Befestigung des Gehäusedeckels weisen keine Senkung auf.

Der in der Fügefläche 10 der Gehäuseglocke 1 vorgesehene Entlüftungskanal 9 mündet in der Senkung 17a. Dadurch ist die Verbindung zu der Durchsteckbohrung 13a des Gehäusedeckels 6 hergestellt. Weiterhin ist anhand der Fig. 3 eine Dichtung D gezeigt, die in der Teilungsebene 8 des Gehäuses angeordnet ist.

Anhand der Fig. 5 sind der Verlauf und der Aufbau des Entlüftungskanals 9 dargestellt. Demnach ist die Nut 11 des Entlüftungskanals 9 in einzelne Kanalstücke O1, O2, O4 und O5 unterteilt, die jeweils einen engen Strömungsquerschnitt aufweisen. Zwischen den Kanalstücken O1, O2, O4 und O5 sind erweiterte Reservoirs R1, R2 und R3 vorgesehen, die zur vorübergehenden Speicherung von Öl dienen. Die genuteten Kanalstücke O1, O2, O4 und O5 sind in die Fügefläche 10 der Gehäuseglocke 1 eingearbeitet. Sie drosseln den Zustrom von Öl in die Reservoirs R1, R2 und R3.

Bei den Reservoirs R1, R2 und R3 handelt es sich um langgestreckte taschenförmige Ausnehmungen in der Fügefläche 10 der Gehäuseglocke 1. Im montierten Zustand des Gehäuses sind daraus Kammern gebildet. Die taschenförmigen Ausnehmungen erstrecken sich, wie in Fig. 5 zu sehen, entlang einer Kreislinie. Sie sind zwischen den Gewindebohrungen 17 für die Befestigungsschrauben des Gehäusedeckels 6 angeordnet und liegen etwa auf demselben Kreisdurchmesser, wie die Gewindebohrungen 17. Die Ausnehmungen haben ein Aufnahmevolumen, das größer ist als die Ölmenge, die unter jedwedem kritischen Betriebszustand maximal zuströmen kann.

Die Gehäuseglocke 1 ist ausgesteift. Sie weist aus Stabilitätsgründen große Wandstärken auf. Zwecks Leichtbau sind die dicken Wände ausgehölt und bilden die Kammern. Die zwecks Leichtbau vorhandenen Kammern werden vorteilhaft für den Entlüftungskanal 9 genutzt. Die vorgeschlagene Gehäuseglocke 1 ist ein Gusswerkstück mit Rippen, sodass die Kammern zwischen den Rippen liegen. Der Einsatzbereich des Gusswerkstücks erweitert sich durch die Zusatzfunktion, der Kammern als Reservoir in dem Entlüftungskanal.

Die Reservoirs R1, R2 und R3 liegen hintereinander und sind durch die Kanalstücke O2 und O4 in Reihe miteinander verbunden. Das Kanalstück O2 verbindet die Reservoirs R1 und R2. Das Kanalstück O4 verbindet die Reservoirs R2 und R3. Das Kanalstück O1 bildet eine Verbindung zwischen dem Innenraum 18 des Gehäuses und dem unteren Reservoir R1. Das Kanalstück 05 verbindet das obere Reservoir R3 mit der Durchsteckbohrung 13a des Gehäusedeckels 6, die zur Atmosphäre offen ist.

Das Kanalstück O3 bildet einen Ausgleichs - und Rückströmkanal, der an der tiefsten Stelle des mittleren Reservoirs R2 angeschlossen ist. Immer dann, wenn das Kanalstück O1 bereits mit Öl beaufschlagt ist, kann über den höher liegenden Ausgleichs- und Rückströmkanal O3 ein Druckausgleich in dem Innenraum 18 des Gehäuses erfolgen.

Ein Druckausgleich ist möglich solange der Ausgleichs- und Rückströmkanal O3 noch nicht mit Öl beaufschlagt ist. Erhöht sich die Neigung oder treten hohe Verzögerungswerte auf, so kann Öl auch in den Ausgleichs- und Rückströmkanal dringen. Dies kann beispielsweise bei einer Vollbremsung auftreten. Bei einer Fahrzeugvollbremsung können Verzögerungswerte von etwa zweifacher Erdbeschleunigung in horizontaler Richtung sowie einfacher Erdbeschleunigung in vertikaler Richtung auftreten.

Wenn Öl in das mittlere Reservoir R2 eingedrungen ist, kann es anschließend auf kurzem Weg von dort durch den Ausgleichs- und Rückströmkanal O3 zurück in den Innenraum 18 des Gehäuses strömen. Der Ausgleichskanal O3 dient in diesem Moment als zusätzlicher Rückströmkanal O3 oder Bypass, damit das Öl nicht durch das vorgeschaltete Reservoir R1 zurückströmen muss. Sobald der Ölspiegel in dem Entlüftungskanal 9 unterhalb des mittleren Reservoirs R2 abgesunken ist, liegt der Ausgleichs- und Rückströmkanal O3 wieder frei und kann einen Druckausgleich schaffen. Dies, indem die in den Innenraum 18 zurückströmende Menge Öl eine entsprechende Menge Luft verdrängt und durch den Ausgleichs- und Rückströmkanal O3 hindurch nach ableitet. Das untere Reservoir R1 entleert sich wegen dieses Druckausgleichs rasch.

## Patentansprüche

1. Gehäuse für ein ölbefülltes Getriebe dessen Innenraum (18) zwecks Druckausgleich über einen Entlüftungskanal (9) mit der Atmosphäre verbunden ist, insbesondere für ein Fahrzeuggetriebe, bestehend aus wenigstens zwei Gehäuseteilen (1, 6), wobei die Gehäuseteile (1, 6) Fügeflächen (10, 12) aufweisen, die im aneinandergefügten Zustand eine Teilungsebene (8) des Gehäuses bilden, der Entlüftungskanal (9) zumindest abschnittsweise in der Teilungsebene (8) des Gehäuses vorgesehen und in der Fügefläche (10, 12) eines Gehäuseteils (1, 6) integriert ist und der Entlüftungskanal (9) an seinem der Atmosphäre zugewandten Ende in einer zur Atmosphäre offenen Bohrung des Gehäuseteils (6) mündet.
**dadurch gekennzeichnet, dass** die Bohrung als eine
Durchsteckbohrung (13a) zur Aufnahme einer Befestigungsschraube dient und eine an dem Rand der Durchsteckbohrung (13a) vorgesehene Auflagefläche (15) für den Schraubenkopf (16) der Befestigungsschraube wenigstens eine Entlüftungskerbe (14) aufweist.

2. Gehäuse nach Anspruch 1,
**dadurch gekennzeichnet, dass**
der Entlüftungskanal (9) eine Nut (11) in der Fügefläche (10, 12) des Gehäuseteils (1, 6) aufweist, wobei die Nut (11) im zusammengefügten Zustand des Getriebes abgedeckt ist und einen geschlossenen Strömungsquerschnitt bildet.

3. Gehäuse nach Anspruch 1 oder 2,
**dadurch gekennzeichnet, dass**
der Entlüftungskanal (9) wenigstens ein Reservoir (R1, R2, R3) zwecks vorübergehender Speicherung von Getriebeöl aufweist.

4. Gehäuse nach Anspruch 3,
**dadurch gekennzeichnet, dass**
in dem Entlüftungskanal (9) drei Reservoirs (R1, R2, R3) vorgesehen sind.

5. Gehäuse nach Anspruch 4,
**dadurch gekennzeichnet, dass**
die Reservoirs(R1, R2, R3) durch Kanalstücke (01, 02, 04, 05) in der Fügefläche (10, 12) des Gehäuseteils (1, 6) in einer Reihe miteinander verbunden sind.

6. Gehäuse nach Anspruch 5,
**dadurch gekennzeichnet, dass**
die Volumina der hintereinandergeschalteten Reservoirs (R1, R2, R3) vom Innenraum (18) des Getriebes zur Atmosphäre hin zunehmen.

7. Gehäuse nach einem der Ansprüche 3 bis 6,
**dadurch gekennzeichnet, dass**
ein mit Rippen versteiftes Gehäuseteil (1, 6) als Träger des Entlüftungskanals (9) vorgesehen ist, wobei zwischen den Rippen des Gehäuseteils (1, 6) taschenförmige Ausnehmungen vorhanden sind, von denen wenigstens eine als Reservoir (R1, R2, R3) dient.

8. Gehäuse nach einem der Ansprüche 1 bis 7,
**dadurch gekennzeichnet, dass**
zwischen den beiden Enden des Entlüftungskanals (9) ein zusätzlicher Verbindungskanal zum Innenraum des Getriebes als Ausgleichs- und Rückströmkanal (03) vorgesehen ist.

9. Gehäuse nach Ansprüchen 8 und 5,
**dadurch gekennzeichnet, dass**
der Ausgleichs- und Rückströmkanal (03) mit dem mittleren Reservoir (R2) verbunden und in Betriebslage des Getriebes an der tiefsten Stelle des Reservoirs (R2) angeschlossen ist.

10. Gehäuse für ein Fahrzeuggetriebe mit einem ölbefüllten Übersetzungsgetriebe (5) in einem hinteren Bereich (4) einer Gehäuseglocke (1) sowie einem zur Atmosphäre offenen vorderen Bereich (2) der Gehäuseglocke (1), in dem eine Kupplungseinheit (3) angeordnet ist, nach einem der Ansprüche 1 bis 9,
**dadurch gekennzeichnet, dass**
das der Atmosphäre zugewandten Ende des Entlüftungskanals (9) schmutzgeschützt zum Innenraum (19) des vorderen Bereichs (2) der Gehäuseglocke (1) entlüftet ist.

## Claims

1. Housing for an oil-filled transmission, the interior (18) of which for the purpose of pressure equalization is connected to the atmosphere by way of a venting duct (9), especially a housing for a vehicle transmission, comprising at least two housing parts (1, 6), the housing parts (1, 6) having joining faces (10, 12), which in a joined state form a dividing plane (8) of the housing, at least sections of the venting duct (9) being provided in the dividing plane (8) of the housing and being integrated in the joining face (10, 12) of a housing part (1, 6), and the venting duct (9) at its end facing the atmosphere opening out in a bore of the housing part (6) open to the atmosphere, **characterized in that** the bore serves as an insertion hole (13a) for receiving a fixing bolt and that a bearing face (15), provided at the edge of the insertion hole (13a) for the bolt head (16) of the fixing bolt, has at least one venting slot (14).

2. Housing according to Claim 1, **characterized in that** the venting duct (9) has a groove (11) in the joining face (10, 12) of the housing part (1, 6), the groove (11) being covered in the assembled state of the transmission so as to form a closed cross section of flow.

3. Housing according to Claim 1 or 2, **characterized in that** the venting duct (9) has at least one reservoir (R1, R2, R3) for temporary storage of transmission oil.

4. Housing according to Claim 3, **characterized in that** three reservoirs (R1, R2, R3) are provided in the venting duct (9).

5. Housing according to Claim 4, **characterized in that** the reservoirs (R1, R2, R3) are connected in series to one another by duct pieces (01, 02, 04, 05) in the joining face (10, 12) of the housing part (1, 6) .

6. Housing according to Claim 5, **characterized in that** the volumes of the reservoirs (R1, R2, R3) connected in series increase from the interior (18) of the transmission towards the atmosphere.

7. Housing according to one of Claims 3 to 6, **characterized in that** a housing part (1, 6) which is reinforced with ribs is provided as carrier of the venting duct (9), pocket-shaped recesses, at least one of which serves as a reservoir (R1, R2, R3), being present between the ribs of the housing part (1, 6).

8. Housing according to one of Claims 1 to 7, **characterized in that** an additional connecting duct leading to the interior of the transmission is provided, as an equalization and return-flow duct (03), between the two ends of the venting duct (9).

9. Housing according to Claims 8 and 5, **characterized in that** the equalization and return-flow duct (03) is connected to the middle reservoir (R2) and in the operating position of the transmission is linked to the lowest point of the reservoir (R2).

10. Housing for a vehicle transmission comprising an oil-filled speed-transforming transmission (5) in a rear region (4) of a housing bell (1) and having a front region (2) of the housing bell (1) which is open towards the atmosphere and in which there is arranged a clutch unit (3), according to one of Claims 1 to 9, **characterized in that** the end of the venting duct (9) which faces the atmosphere is vented, in a manner protected from dirt, towards the interior (19) of the front region (2) of the housing bell (1).

## Revendications

1. Carter pour une boîte de vitesses remplie d'huile, dont l'espace interne (18) est connecté à l'atmosphère par le biais d'un canal de désaérage (9) dans le but de réaliser un équilibre de pression, notamment pour une boîte de vitesses de véhicule, constitué d'au moins deux parties de carter (1, 6), les parties de carter (1, 6) présentant des faces de joint (10, 12) qui forment dans l'état assemblées l'une contre l'autre un plan de séparation (8) du carter, le canal de désaérage (9) étant prévu au moins en partie dans le plan de séparation (8) du carter et étant intégré dans la face de joint (10, 12) d'une partie du carter (1, 6) et le canal de désaérage (9) débouchant au niveau de son extrémité tournée vers l'atmosphère dans un alésage ouvert vers l'atmosphère de la partie du boîtier (6),
**caractérisé en ce que**
l'alésage sert d'alésage traversant (13a) pour recevoir une vis de fixation et une surface d'appui (15) prévue sur le bord de l'alésage traversant (13a) pour la tête de vis (16) de la vis de fixation présente au moins une encoche de désaérage (14).

2. Carter selon la revendication 1,
**caractérisé en ce que**
le canal de désaérage (9) présente une rainure (11) dans la face de joint (10, 12) de la partie du carter (1, 6), la rainure (11) étant recouverte dans l'état assemblé de la boîte de vitesses et formant une section transversale d'écoulement fermée.

3. Carter selon la revendication 1 ou 2,
**caractérisé en ce que**
le canal de désaérage (9) présente au moins un réservoir (R1, R2, R3) en vue de stocker temporairement l'huile de boîte de vitesses.

4. Carter selon la revendication 3,
**caractérisé en ce que**
trois réservoirs (R1, R2, R3) sont prévus dans le canal de désaérage (9).

5. Carter selon la revendication 4,
**caractérisé en ce que**
les réservoirs (R1, R2, R3) sont connectés les uns aux autres en série par des sections de canal (01, 02, 04, 05) dans la face de joint (10, 12) de la partie du carter (1, 6).

6. Carter selon la revendication 5,
**caractérisé en ce que**
les volumes des réservoirs (R1, R2, R3) montés les uns derrière les autres augmentent depuis l'espace interne (18) de la boîte de vitesses en direction de l'atmosphère.

7. Carter selon l'une quelconque des revendications 3 à 6,
**caractérisé en ce que**
l'on prévoit une partie de carter (1, 6) renforcée par des nervures en tant que support du canal de désaérage (9), des évidements en forme de poche étant prévus entre les nervures de la partie de boîtier (1, 6), dont au moins un sert de réservoir (R1, R2, R3).

8. Carter selon l'une quelconque des revendications 1 à 7,
**caractérisé en ce que**
l'on prévoit entre les deux extrémités du canal de désaérage (9) un canal supplémentaire de connexion à l'espace interne de la boîte de vitesses en tant que canal de compensation et de reflux (03).

9. Carter selon les revendications 8 et 5,
**caractérisé en ce que**
le canal de compensation et de reflux (03) est connecté au réservoir central (R2) et est raccordé en position de fonctionnement de la boîte de vitesses au point le plus profond du réservoir (R2).

10. Carter pour une boîte de vitesses de véhicule comprenant une boîte de vitesses remplie d'huile (5) dans une région arrière (4) d'une cloche de carter (1) ainsi qu'une région avant (2) de la cloche de carter (1) ouverte vers l'atmosphère, dans laquelle une unité d'accouplement (3) est disposée, selon l'une quelconque des revendications 1 à 9,
**caractérisé en ce que**
l'extrémité du canal de désaérage (9) tournée vers l'atmosphère est désaérée de manière protégée contre les salissures vis-à-vis de l'espace interne (19) de la région avant (2) de la cloche du carter (1).
